# EUROPÄISCHE PATENTSCHRIFT

(11) **EP 3 162 485 B1**
(45) Veröffentlichungstag und Bekanntmachung des Hinweises auf die Patenterteilung: **04.05.2022**
(21) Anmeldenummer: 16188863.1
(22) Anmeldetag: 15.09.2016
(51) Int. Cl.: B23K 1/00, H05K 3/34

(54) **VERFAHREN ZUR HERSTELLUNG EINES BAUTEILES**
COMPONENT MANUFACTURING METHOD
PROCÉDÉ DE FABRICATION D'UNE PIÈCE

(30) Priorität: 29.10.2015 DE 102015221196
(43) Veröffentlichungstag der Anmeldung: 03.05.2017
(73) Patentinhaber: SCHOTT AG, 55122 Mainz (DE)
(72) Erfinder: HARTL, Helmut, 1210 Wien (AT)
(74) Vertreter: Sawodny, Michael-Wolfgang

(56) Entgegenhaltungen:
- WO-A1-01/70445
- WO-A2-2010/020753
- DE-A1- 10 128 746
- US-A1- 2003 098 179

## Beschreibung

Die Erfindung betrifft ein Verfahren zur Herstellung eines Bauteiles, das Sensoren umfasst, gemäß dem Oberbegriff des Anspruchs 1 (siehe z.B. WO 2010/020753 A2). Die Erfindung betrifft auch ein Verfahren zum Verbindung eines Funktionselementes mit Herstellung des Bauteiles mit einem solchen Herstellungsverfahren, siehe Anspruch 8.

Aus dem Stand der Technik ist bekannt bei einem Bauteil mit Bohrungen auf das eine Beschichtung aufgebracht wird, eine beschichtungsfreie Bohrung dadurch herzustellen, dass die Bohrung ganz oder teilweise durch aufwendiges Maskieren von der Beschichtung mit einem Beschichtungsmaterial ausgeschlossen wird. Die Maskierung des Bauteiles um eine Beschichtung desselben zu verhindern, ist jedoch sehr aufwendig. Alternativ kann die Beschichtung auch zerspanend entfernt werden, was jedoch ebenfalls sehr zeitintensiv ist.

Die WO 98/41069A zeigt eine Leiterplatte, bei der Drähte, insbesondere Anschlussdrähte durch ein lotfreies Loch geführt werden. Um den Lotfluss zu unterbinden sind bei der WO 98/41069A die Lotpads neben den Löchern angeordnet. Gemäß der WO 98/41069A soll auf diese Art und Weise ein unkontrollierter Lotfluss in das Loch verhindert werden. Explizit fordert die WO98/41069A, dass die Lotpads in der Nähe der Bohrungen angeordnet, aber ausreichend beabstandet sind, damit ein unkontrolliertes Durchfließen des Lötzinnes durch die Bohrungen verhindert wird. Nirgendwo in der WO 98/41069A ist die Rede davon, dass die Löcher mit einer Beschichtung versehen werden. Die DE 10 2010 045 624 A1 beschreibt ein ring- oder plattenförmiges Element, in das durch einen Stanzprozess eine Öffnung eingebracht wird. Auch in de DE 10 2010 045 624 A1 ist keine Rede davon, dass die Öffnung mit einer Beschichtung versehen wird.

Die US 2003/0098179 A1 beschreibt eine Verdrahtungsplatine mit einer Vielzahl von Leitern und ein Verfahren zum Einbringen von Bohrungen in das Harzmaterial der Verdrahtungsplatine durch Laserbohren.

Aus der WO 01/70445 A1 ist ein Verfahren und eine Vorrichtung bekannt geworden bei der ein Bauteil mit unterschiedlichen Schichten für eine Anwendung im Fahrzegbereich zur Verfügung gestellt wird.

Die DE 101 28746 A1 zeigt eine Vorrichung zur Ausbildung einer Reissnaht als Sollbruchstelle in einem Fahrzeug - Verkleidungsteil mit einer Laservorrichtung. Aus der WO 2010/020753 A2 ist eine Leiterplatine (PCB) bestehend aus einem Substrat, das einen Isolator umfasst sowie eine Beschichtung bekannt geworden.

Aufgabe der Erfindung ist es, ein Verfahren anzugeben, dass eine einfach und kostengünstige Fertigungsmethode für Bauteile mit einer beschichtungsfreien Öffnung angibt, bei der keine Maskierung mehr notwendig ist und insbesondere eine eventuell vorhandene Maskierung nicht durch Zerspanung entfernt werden muss.

Diese Aufgabe wird durch ein Herstellungsverfahren gemäß Anspruch 1 gelöst. Ein Verfahren zum Verbinden eines Funktionselements mit Verwendung eines solchen Herstellungsverfahren ist im Anspruch 8 definiert. Die Unteransprüche bezeichnen Weiterbildungen der Erfindung sowie spezielle Anwendungen.

Das erfindungsgemäße Verfahren zeichnet sich dadurch aus, dass zunächst ein Bauteil mit wenigstens einer Öffnung und/oder Bohrung, insbesondere in Form eines Sackloches zur Verfügung gestellt wird, wobei die Öffnung und/oder Bohrung insbesondere das Sackloch wenigstens teilweise mit einer Beschichtung versehen ist. Das Bauteil ist ein kaltumgeformtes Bauteil in das die Öffnungen bereits beim Umformprozess eingebracht werden. Um auf das kaltumgeformte Bauteil mit Öffnungen ein weiteres Bauteil z.B. ein Sensorgrundgehäuse aufbringen zu können, wird das Bauteil mit einer Beschichtung versehen.

Nachdem das Bauteil zur Verfügung gestellt und die Beschichtung aufgebracht wurde, wird das Bauteil weiter bearbeitet, in dem die Öffnung und/oder Bohrung, insbesondere das Sackloch durch ein Aufmaß durch Nachbearbeitung vergrößert wird und zwar derart, dass dabei die Beschichtung weitgehend vollständig aus dem Bereich der Öffnung und/oder der Bohrung, insbesondere dem Sackloch entfernt wird und sich eine weitgehende beschichtungsfreie Öffnung und/oder Bohrung insbesondere in Form eines Sackloches ergibt.

Aufgrund der Entfernung der Beschichtung von der Durchgangsöffnung wird sichergestellt, dass die Durchgangsöffnung auch beim Aufbringen von Lotmaterial auf den Grundkörper lotfrei bleibt. Es ist dann möglich ein Funktionselement durch ein durch die Öffnung geführtes Element beispielsweise ohne Beschränkung hierauf einen Zentrierstift auszurichten und anschließend mit dem Grundkörper zu verbinden, bspw. zu verlöten. Insbesondere kann das Element beispielsweise der Zentrierstift aus der Öffnung wieder leicht entnommen werden, da das Element, d.h. der Zentrierstift aufgrund der Lotfreiheit der Öffnung beliebig ein- und ausgeführt werden kann. Somit kann der Zentrierstift nur temporär in die Öffnung eingeführt werden, was im Stand der Technik nicht gezeigt ist.

Besonders bevorzugt stellt die Nachbearbeitung der Öffnung und/oder Bohrung gemäß der Erfindung sicher, dass beim Verlöten beispielsweise eines Glasblockes als Sensorgrundbauteil auf dem beschichteten Bauteil Lotmaterial nicht in die Öffnung gelangt und dort unter Umständen zu Verklebungen von durch die Öffnung hindurch geführten Bauteilen, wie z.B. Zentrierstiften, führt. Im Gegensatz zu kaltumgeformten Bauteilen mit Öffnungen ist ein Lotstop bei Bauteilen, in die beispielsweise die Öffnungen durch Bohren eingebracht werden, nicht realisierbar. So fließt bei gebohrten Löchern das Lotmaterial über die Kanten in die Öffnung und verklebt dort eingebrachte Bauteile.

Als Nachbearbeitungsfahren wird erfindungsgemäß das Stanzen eingesetzt. Durch Stanzen mit einem Stanzwerkzeug wird die Öffnung und/oder die Bohrung insbesondere das Sackloch im Durchmesser um das Aufmaß vergrößert. Bei einem derartigen Verfahren handelt es sich um eine spanloses Verfahren für das einfache, kostengünstige Werkzeuge eingesetzt werden können. Die Verwendung eines Stanzverfahrens ist bei Aufweiten der Öffnung in dem kaltgeformten Material besonders vorteilhaft.

Des Weiteren handelt es sich bei der Verwendung eines Stanzwerkzeuges zum Aufweiten der Öffnung und/oder Bohrung, insbesondere des Sackloches, um eine Fertigungsmethode, bei der ein Entgratungsprozess nicht mehr notwendig ist. Mit Hilfe des Stanzprozesses ist es möglich, sehr kleine Bohrungen mit einem Durchmesser < 1mm, insbesondere sogar < 0,2mm herzustellen, wobei besonders scharfe Bohrungskanten erzielbar sind.

Des Weiteren wird dem erfindungsgemäßen Verfahren erreicht, dass keine teilweise beschichtungsfreie Randzonen auftreten, wie dies beim Maskieren auftritt.

Um eine Durchgangsöffnung durch das gesamte ring- und / oder plattenförmige Element zur Verfügung zu stellen, kann in einer verbesserten Ausgestaltung der Erfindung vorgehen sein, dass durch erneutes Stanzen ein Durchstanzen durch den Rest des Materiales des Bauteiles erfolgt und so eine Durchgangsöffnung im Bereich des Sackloches zur Verfügung gestellt wird. Je nach Dicke des im Wesentlichen ring- und/oder plattenförmigen Bauteiles, die bevorzugt im Bereich 1 mm bis 10 mm liegt, ist es möglich, die Durchgangsöffnung im Bereich des Sackloches oder bei sehr dicken Bauteilen im Bereich eines Freistellungsbereiches, der als Freistellungsbohrung ausgeführt sein kann, herzustellen.

Mit dem erfindungsgemäßen Verfahren können die verschiedensten Metalle, wie beispielsweise sämtliche Buntmetalle, Leichtmetalle, Stahl, Edelstahl oder Nickellegierungen bearbeitet werden. Als Beschichtungsmaterialien werden alle gebräuchlichen galvanisch oder chemisch aufzutragenden Schichten, bevorzugt beispielsweise Au, eingesetzt. Möglich sind aber auch Ag, Pt, Ni, Cu oder Sn.

Durch die Entfernung der Beschichtung gemäß dem erfindungsgemäßen Verfahren, wird ein selektives Beschichten ohne Maskierung zur Verfügung gestellt, die die Herstellung einer beschichtungsfreien Öffnung und/oder Bohrung insbesondere eines Sackloches ermöglichen. Durch die beschichtungsfreie Öffnung wird sichergestellt, dass kein Lotmaterial bei oder nach Durchführung eines Lotprozesses in die Öffnung gelangt.

Des Weiteren zeichnet sich das erfindungsgemäße Verfahren durch eine einfache Automatisierbarkeit aus.

Neben dem erfindungsgemäßen Herstellverfahren stellt die Erfindung auch ein Verfahren zum Verbinden eines Funktionselementes , insbesondere eines Sensorbauteiles, mit einem Bauteil zu einer Anordnung, insbesondere einem Drucksensor gemäß Anspruch 8 zur Verfügung. Insbesondere wird auf eine Grundplatte ein Sensorelement, insbesondere ein Drucksensorelement aufgebracht. Drucksensoren sind Messelemente, welche den Druck einer Gasoder Flüssigkeitsmenge erfassen und in ein elektrisches Signal umwandeln. Es gibt verschiedene Typen von Drucksensoren, von denen vor allem Absolut- und Differenzdrucksensoren von der Industrie und den Automobilherstellern genutzt werden.

Drucksensoren reagieren empfindlich auf Überbelastung. Wird der Messbereich überschritten, kann der Sensor leicht irreparabel beschädigt werden. Mit Hilfe von hermetisch versiegelten Glas-Metall-Gehäusen können die empfindlichen Bauteile zuverlässig geschützt werden. Derartig hermetische versiegelte Glas-MetallGehäuse weisen erfindungsgemäße Durchgangsöffnungen auf.

Die Erfindung soll nachfolgend anhand der Ausführungsbeispiele ohne Beschränkung hierauf beschrieben werden.

Eine mögliche Ausgestaltung eines Sensorbauteiles, umfasst wenigstens einen Drucksensor sowie eine Sensorgrundplatte, die bevorzugt aus Stahl sein kann.

Die Grundplatte des Sensorbauteiles umfasst die nach dem erfindungsgemäßen Verfahren hergestellte Öffnung.

Die Öffnung ist erfindungsgemäß beschichtungsfrei. Dies erfolgt erfindungsgemäß dadurch, dass ein Stanzprozess vorgesehen ist, bei dem der Lochdurchmesser durch ein Aufmaß geändert wird und so die Beschichtung im Bereich des Sackloches abgeschabt wird. Durch dieses Verfahren wird ein beschichtungsfreies Sackloch, das keine Beschichtung mehr aufweist, erhalten. Mit Hilfe eines Stanzverfahrens kann das Sacklock durch das gesamte Bauteil durchgestanzt werden. Es ergibt sich dann eine Durchgangsöffnung. Alternativ ist es auch möglich auf der dem Sackloch gegenüberliegenden Seite eine weitere Öffnung vorzusehen, die man auch als Freistellungsbereich bezeichnen kann, da dann die Dicke des Bauteils zwischen Sackloch und Freistellungsbereich so weit reduziert wird, dass das gesamte Bauteil vom Sackloch her durchgestanzt werden kann.

Über dem beschichtungsfreien Sackloch, beispielsweise mit einem Freistellungsbereich, kann ein Glassockel als Sensorgrundelement angeordnet werden, der mittels eines Zentrierstiftes, der durch das Sackloch hindurchgeführt wird, zentriert wird. Dadurch, dass die Öffnung beschichtungsfrei ist, wird verhindert, dass Lötmaterial bzw. Lotmaterial, mit dem das Sensorgrundelement auf die Grundplatte aufgelötet wird, in die Öffnung gelangt. Würde nämlich Lotmaterial in die Öffnung gelangen, so könnte der Zentrierstift nach der Zentrierung des Glasblockes nicht mehr aus der Öffnung herausgenommen werden, weil durch das Lotmaterial sich der Zentrierstift in der Öffnung fest mit der Grundplatte verbindet. Bei dem Lotmaterial handelt es sich um ein metallisches und/oder elektrisch leitfähiges Lotmaterial.

Der Zentrierstift weist in der Regel einen leicht geringeren Durchmesser als das Sackloch auf, so dass er in die Öffnung bzw. das Sackloch leicht ein- und ausgeführt werden kann.

Es zeigen:
- Fig. 1a - 1c: eine Ausgestaltung der Erfindung ohne zweite Öffnung bzw. Freistellungsbereich
- Fig. 2a - 2c: eine Ausgestaltung der Erfindung mit zweiter Öffnung bzw. Freistellungsbereich
- Fig. 3: eine erfindungsgemäße Grundplatte mit zweiter Öffnung bzw. Freistellungsbereich und mit Hilfe eines Zentrierstiftes angeordnetem Sensorelement.

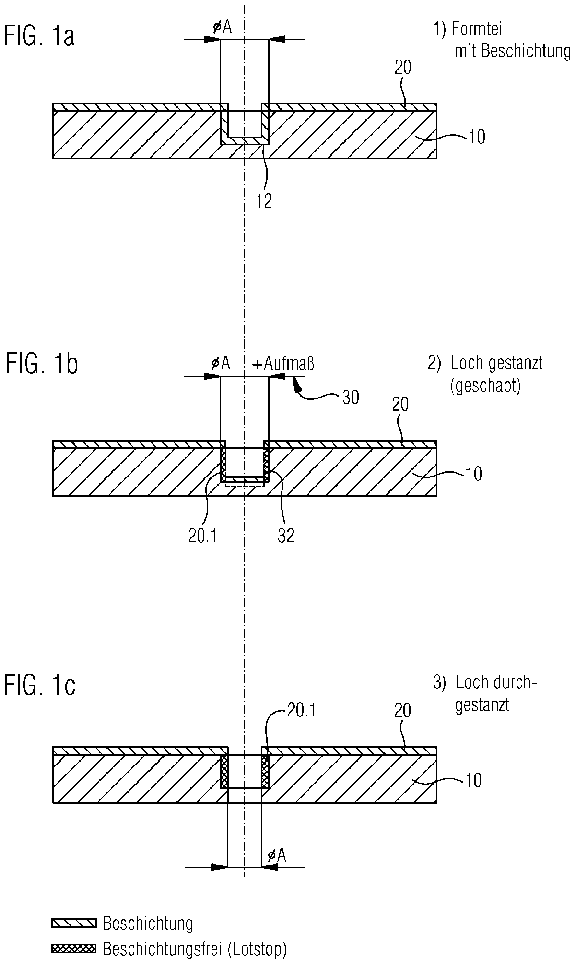

In Fig. 1a ist ein Bauteil 10 mit einem Sackloch 12 gezeigt. Das Bauteil 10 ist plattenförmig und kann eine ringförmige Kontur aufweisen. Das Sackloch 12, das bei der Herstellung des Bauteils im Kaltumformprozess eingebracht wird, ist in dem Ausführungsbeispiel in Fig. 1a mittig angeordnet. Der Durchmesser, der Sacklochbohrung beträgt A. Das Sackloch ist mit einem Beschichtungsmaterial, bevorzugt Gold (Au), beschichtet. Die Beschichtung trägt die Bezugsziffer 20 und ist sowohl auf die Oberfläche des Bauteiles 10, wie auf die Oberfläche im Bereich des Sackloches 12 aufgebracht. Die Beschichtung des Bauteils dient dazu eine Fläche zur Verfügung zu stellen, auf die ein Lotmaterial aufgebracht werden kann, mit dem z.B. ein Glasblock darstellend ein Sensorgrundelement auf dem Bauteil befestigt wird. Der Durchmesser A, des Sackloches kann ohne Beschränkung hierauf < 20 mm, bevorzugt < 10 mm sein. Der Durchmesser A des Sacklochs ist stets > 0,2 mm, da ansonsten der zum Stanzen eingesetzte Stempel nicht mehr in die Tiefe eintauchen kann. Der zum Stanzen eingesetzte Stift wäre dann so dünn, dass er bricht.

In einem zweiten Verfahrensschritt wird, wie in Fig. 1b gezeigt, das Sackloch 12 mit Hilfe einer Nachbearbeitung bevorzugt durch Stanzen aufgeweitet, d. h. der Durchmesser A wird um ein Aufmaß vergrößert. Der Durchmesser des vergrößerten Sackloches 32 beträgt A + das Aufmaß. Dieser Durchmesser ist mit Bezugsziffer 30 in Fig. 1b eingezeichnet. Gleiche Bauteile, wie in Fig. 1a, sind mit denselben Bezugsziffern bezeichnet. Wie aus Fig. 1b zu entnehmen ist, wird durch den Stanzprozess, bei dem der Lochdurchmesser durch das Aufmaß geändert wird, die Beschichtung 20 im Bereich des Sackloches abgeschabt. Es ergibt sich dann ein beschichtungsfreies Sackloch, das als Lotstopp eingesetzt werden kann.

Das Aufmaß, um das der Durchmesser des Sackloches geändert wird, beträgt zwischen 0,1% und 10% des ursprünglichen Durchmessers A, d. h. Aufmaß = 0,1% · A bis 10% · A.

Wenn eine Durchgangsöffnung durch das gesamte Bauteil 10 gewünscht ist, kann diese in einem weiteren Nachverarbeitungsschritt wiederum beispielsweise durch ein Stanzverfahren hergestellt werden. Wie aus Fig. 1c hervorgeht, wird das Material 10 durchstanzt, wobei das Stanzwerkzeug einen Durchmesser aufweist, der geringer ist, als der Durchmesser des aufgeweiteten Sackloches. Beispielsweise kann der Durchmesser dem Durchmesser A der ursprünglichen Sacklochbohrung 12 entsprechen.

Wie Fig. 1c zu entnehmen ist, ist aufgrund des zweiten Verfahrensschrittes das Sackloch 12, das nunmehr durchgestanzt ist, frei von einer Beschichtung. Der beschichtungsfreie Bereich ist mit 20.1 bezeichnet. Die Durchgangsöffnung gemäß Fig. 1c zeichnet sich dadurch aus, dass sehr scharfe Bohrungskanten herstellbar sind und wie Fig. 1c zeigt, keine beschichtungsfreien Randzonen, wie sie beispielsweise beim Maskieren auftreten können, vorliegen. Die Materialien des Bauteiles sind bevorzugt Metalle, insbesondere Bunt- oder Leichtmetalle sowie Stahl- und Nickellegierungen. Das erfindungsgemäße Verfahren zeichnet sich des Weiteren durch eine einfache Automatisierbarkeit aus.

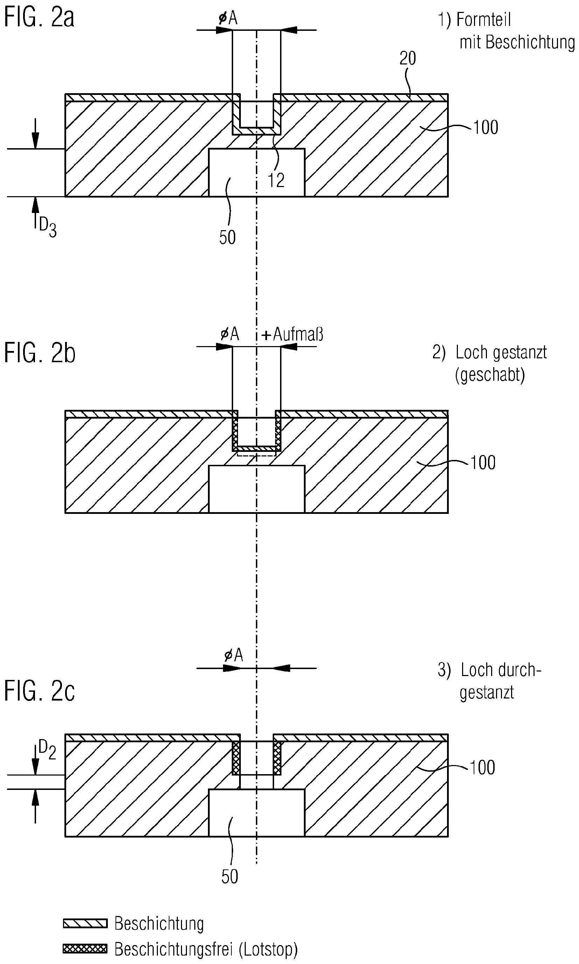

Die Fig. 2a - 2c zeigen eine alternative Ausgestaltung eines Verfahrens, bei dem ein wesentlich dickeres Bauteil, wie in den Figuren 1a - 1c gezeigt, hergestellt wird. Das Bauteil ist mit Bezugsziffer 100 bezeichnet. Während die Dicke des Bauteiles in Fig. 1a - 1c im Bereich 1mm bis 10mm, bevorzugt 1mm bis 6mm liegt, kann das Bauteil 100 gemäß den Fig. 2a - 2c deutlich dicker ausgebildet sein, beispielsweise mehr als 10mm. Das Bauteil 100 zeichnet sich dadurch aus, dass gegenüberliegend dem Sackloches 12 eine weitere Öffnung, ein sogenannter Freistellungsbereich 50 vorgesehen ist. Hierdurch wird im Bereich des Sackloches die Dicke des Bauteiles um D_{B} reduziert. Das Sackloch ist wie in Fig. 1a mit der Bezugsziffer 12 bezeichnet, die Beschichtung mit 20. Der Durchmesser der Sacklochbohrung beträgt A, wie in Fig. 1a dargestellt. Wie in Fig. 1a wird durch die Nachbearbeitung des Sackloches mit einem Stanzschritt, wie in Fig. 2b dargestellt, die Beschichtung im Bereich des Sackloches durch den Stanzprozess abgelöst. Hierzu wird bei einem Stanzprozess die Sacklochbohrung mit Durchmesser A um ein Aufmaß aufgeweitet, nämlich auf einen Durchmesser A + Aufmaß. Die Beschichtung wird im Wesentlichen abgeschabt und ist nach der Nachbearbeitung gemäß Fig. 2b nicht mehr vorhanden. Wenn das Bauteil 100, wie in Fig. 1c dargestellt, durchgestanzt werden soll, so ist dies gemäß Fig. 2c problemlos möglich, da die durchstanzende Restdicke aufgrund der Freistellungsbohrung 50 lediglich D_{R} beträgt.

Die Erfindung ermöglicht es, dass auf das Bauteil 10, das wie in den Figuren 1a bis 2c beschrieben hergestellt wird, ein Lot aufgebracht wird, wobei die Durchgangsöffnung dank des Entfernens der Beschichtung lotfrei bleibt. Es ist dann möglich ein Funktionselement über der Durchgangsöffnung anzubringen. Ein Element, beispielsweise ein Zentrierstift kann durch die Durchgangsöffnung geführt und wieder entfernt werden, was aufgrund der Lotfreiheit möglich ist. Das Funktionselement kann nach einer Zentrierung mit dem Bauteil verbunden, bspw. verlötet werden. Danach kann der Zentrierstift wieder entnommen werden.

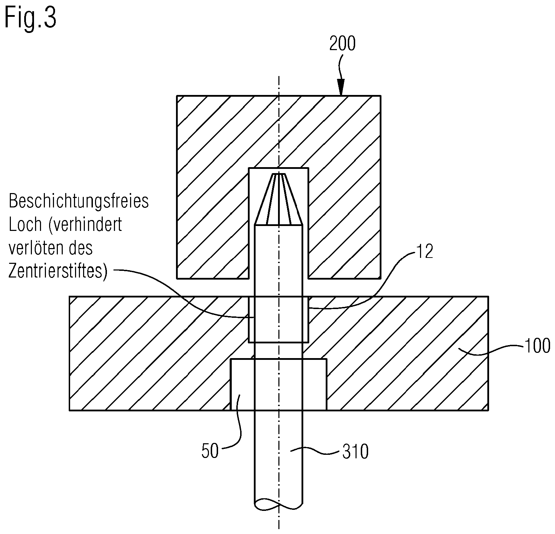

Figur 3 zeigt detailliert eine temporäre Anordnung eines Zentrierstiftes in einer Durchgangsöffnung zur Zentrierung eines Sensorgrundgehäuses 200 auf einem Bauteil 100 ohne hierauf beschränkt zu sein.

Figur 3 zeigt die Anordnung eines Sensorgrundgehäuses 200 in Form eines Glasblockes auf dem erfindungsgemäßen Bauteil 100 in Form einer Grundplatte bzw. Basisplatte oberhalb der erfindungsgemäßen Öffnung in Form eines Sacklochs 12. Bei dem Sackloch 12 handelt es sich um ein Sackloch, das in ein Bauteil 100 wie in den Figuren 2a bis 2c dargestellt eingebracht wurde. Das Bauteil umfaßt einem Freistellungsbereich 50. Da das Sackloch mit Durchmesser A beim Stanzprozess durch ein Aufmaß aufgeweitet wird, wird die Beschichtung im Bereich der Öffnung im Wesentlichen abgeschabt. Wird das Sensorgrundelement 200 dann mit Hilfe eines Lotmaterials, das in die Spalte zwischen Sensorgrundelement und Grundkörper eingebracht wird, auf dem Grundkörper befestigt, so kann das Lotmaterial nicht in die Öffnung eindringen, da ja dort keine Beschichtung mehr vorliegt. Bei dem Lotmaterial handelt es sich um ein metallisches und/oder elektrisch leitendes Lotmaterial. Dies hat den Vorteil, dass der Zentrierstift 310, der durch die beschichtungsfreie Öffnung zur Zentrierung des Sensorgrundelements hindurchgeführt wird, nicht durch die Öffnung eindringendes Lotmaterial sich fest mit dem Grundkörper verbinden kann. Es ist dann möglich, nach Abschluss der Zentrierung den Zentrierstift aus der Öffnung des Grundkörpers bzw. der Grundplatte wieder zu entnehmen. Generell wird das Sensorgrundelement zunächst über der Grundplatte bzw. Basisplatte positioniert und mit Hilfe des durch die Öffnung hindurchgeführten Zentrierstifts zentriert bzw. ausgerichtet. Nachdem die Zentrierung bzw. Ausrichtung des Sensorgrundelements in Form eines Glasblocks erfolgt ist, wird das Sensorgrundelement mit einem Lotmaterial mit der Grundplatte bzw. Basisplatte fest verbunden. Hierzu ist die Grundplatte mit einer Beschichtung versehen. Aufgrund der beschichtungsfreien Öffnung wird verhindert, dass Lotmaterial in die Öffnung eindringt und zwischen Zentrierstift und Grundplatte eine feste Verbindung entsteht. Daher ist es möglich, nach Abschluss der Zentrierung und Verlötung des Sensorgrundelements auf der Grundplatte den Zentrierstift wieder aus der Öffnung zu entnehmen.

Mit der Erfindung wird erstmals eine Öffnung bzw. Durchgangsöffnung angegeben, die als Lotstopp fungiert und damit eine Anordnung eines Funktionselementes über der Durchgangsöffnung auch bei auf dem Bauteil aufgebrachtem Lotmaterial ermöglicht. Insbesondere kann beispielsweise die Zentrierung eines Sensorgrundelements über der Grundplatte mittels Zentrierstift vorgenommen werden, wobei der Zentrierstift in die Öffnung eingeführt und nach Abschluss der Verlötung wieder herausgezogen werden kann. Des Weiteren wird, eine Beschichtung bzw. ein Plating ohne eine Maskierung erhalten. Das Einbringen eines Freistellungsbereiches ermöglicht ein Durchstanzen auch dickerer Bauteile mit Dicken > 10mm.

## Patentansprüche

1. Verfahren zur Herstellung eines Bauteiles (10, 100), das Sensoren umfasst, mit wenigstens einer Oberfläche, in welcher zumindest eine weitgehend beschichtungsfreie Öffnung und/oder Bohrung, insbesondere einem Sackloch, angeordnet ist, umfassend nachfolgende Schritte:
- das Bauteil (10, 100) wird kalt umgeformt mit wenigstens einer Öffnung und/oder Bohrung, die eine Beschichtung aufweist,
- die Öffnung und/oder Bohrung wird im Durchmesser (A) um ein Aufmaß durch Nachbearbeitung vergrößert, derart, dass die Beschichtung dabei weitgehend vollständig aus dem Bereich der Öffnung und/oder Bohrung entfernt wird, ergebend eine weitgehend beschichtungsfreie Öffnung und/oder Bohrung,
wobei die Beschichtung auf die Oberfläche der Öffnung und/oder Bohrung aufgebracht ist und die Öffnung und/oder Bohrung mittels Stanzen im Aufmaß vergrößert wird und dabei die Beschichtung im Bereich der Öffnung und/oder Bohrung abgeschabt wird und das Material des Bauteiles ein Metall ist.

2. Verfahren nach Anspruch 1,
**dadurch gekennzeichnet, dass**
das Metall eines der nachfolgenden ist:
- Stahl, Edelstahl, Nickellegierungen, KOVAR
- Nichteisenmetalle, insbesondere Aluminium, Messing, Kupfer, Buntmetall.

3. Verfahren nach Anspruch 1 oder 2,
**dadurch gekennzeichnet, dass**
der Durchmesser der Öffnung und/oder Bohrung einen Durchmesser < 20 mm, insbesondere < 10 mm und/oder > 0,2 mm aufweist.

4. Verfahren nach einem der Ansprüche 1 bis 3,
**dadurch gekennzeichnet, dass**
aus der Öffnung und/oder Bohrung durch Stanzen eine Durchgangsöffnung erhalten wird.

5. Verfahren nach einem der Ansprüche 1 bis 4,
**dadurch gekennzeichnet, dass**
das Bauteil gegenüberliegend der Öffnung und/oder Bohrung eine weitere Öffnung, insbesondere einen Freistellungsbereich (50), umfasst.

6. Verfahren nach einem der Ansprüche 1 bis 5,
**dadurch gekennzeichnet, dass**
die Beschichtung (20) eines oder mehrere der nachfolgenden chemisch oder galvanisch aufzubringende Schichtmaterialien umfasst:
- Au,
- Ag, Pt, Ni, Cu, Sn

7. Verfahren nach einem der Ansprüche 1 bis 6,
**dadurch gekennzeichnet, dass**
das Bauteil, bevorzugt das ring- und/oder plattenförmiges Bauteil, insbesondere die Basisplatte eine Dicke D, insbesondere im Bereich 1 mm bis 10 mm, bevorzugt 3 mm bis 6 mm aufweist.

8. Verfahren zum Verbinden eines Funktionselementes, insbesondere eines Sensorgrundelementes, das oberhalb einer weitgehend beschichtungsfreien Öffnung (12) eines Bauteiles (10,100), angeordnet ist, mit dem Bauteil (10,100) aufweisend eine Öffnung und/oder Bohrung zu einer Anordnung , insbesondere einem Drucksensor, die das Funktionselement und das Bauteil umfasst, das Verfahren umfassend folgende Schritte:
- Herstellung des Bauteils (10, 100) mit einem Verfahren gemäß einem der Ansprüche 1 bis 7,
wobei ein
- Zentrierstift (310) in das Sackloch eingeführt wird, falls die Öffnung und/oder Bohrung ein Sackloch ist, oder, falls die Öffnung und/oder Bohrung eine gestanzte Durchgangsöffnung ist, der Zentrierstift (310) in die eine Durchgangsöffnung (12) des Bauteiles (10,100) eingeführt oder hindurchgeführt wird, zur Zentrierung des Funktionselementes, insbesondere des Sensorgrundelementes (200) auf dem Bauteil (10, 100)
- nach Zentrierung des Funktionselementes, insbesondere des Sensorgrundelementes, wird das Funktionselement mit dem Bauteil verbunden, insbesondere verlötet.

9. Verfahren nach Anspruch 8,
**dadurch gekennzeichnet, dass**
nach Verbinden von Funktionselement, insbesondere Sensorgrundelement (200) und Bauteil (10, 100) der Zentrierstift (310) aus der Öffnung und/oder Bohrung entnommen wird.

10. Verfahren nach einem der Ansprüche 8 bis 9,
**dadurch gekennzeichnet, dass**
das Bauteil (10, 100) eine Grundplatte mit wenigstens einer beschichteten Oberfläche, in der die weitgehend beschichtungsfreie Öffnung und/oder Bohrung angeordnet ist, umfasst.

## Claims

1. Method for the manufacture of a component (10, 100) which comprises sensors, having at least one surface in which at least one largely coating-free opening and/or bore, in particular a blind bore, is arranged, comprising the following steps:
- the component (10, 100) is cold-formed with at least one opening and/or bore having a coating,
- the opening and/or bore is enlarged in diameter (A) by an allowance by post-processing in such a way that the coating is thereby largely completely removed from the region of the opening and/or bore, resulting in a largely coating-free opening and/or bore,
wherein the coating is applied to the surface of the opening and/or bore and the opening and/or bore is enlarged in allowance by means of punching and the coating is thereby scraped off in the region of the opening and/or bore and the material of the component is a metal.

2. Method according to claim 1, **characterized in that** the metal is one of the following:
- steel, stainless steel, nickel alloys, KOVAR
- non-ferrous metals, especially aluminum, brass, copper, non-ferrous metal.

3. Method according to claim 1 or 2, **characterized in that** the diameter of the opening and/or bore has a diameter <20 mm, in particular <10 mm and/or >0.2 mm.

4. Method according to one of claims 1 to 3, **characterized in that** a through-opening is obtained from the opening and/or bore by punching.

5. Method according to one of claims 1 to 4, **characterized in that** the component comprises a further opening, in particular a clearance region (50), opposite the opening and/or bore.

6. Method according to one of claims 1 to 5, **characterized in that** the coating (20) comprises one or more of the following chemically or galvanically applied coating materials:
- Au,
- Ag, Pt, Ni, Cu, Sn

7. Method according to one of claims 1 to 6, **characterized in that** the component, preferably the ring-shaped and/or plate-shaped component, in particular the base plate, has a thickness D, in particular in the range 1 mm to 10 mm, preferably 3 mm to 6 mm.

8. Method for connecting a functional element, in particular a sensor base element, which is arranged above a largely coating-free opening (12) of a component (10, 100), to the component (10, 100) having an opening and/or bore to form an arrangement, in particular a pressure sensor, which comprises the functional element and the component, the method comprising the following steps of:
- manufacturing the component (10, 100) by a method according to one of claims 1 to 7,
wherein a
- centering pin (310) is inserted into the blind bore, if the opening and/or bore is a blind bore, or, if the opening and/or bore is a punched through-opening, the centering pin (310) is inserted into or passed through the one through-opening (12) of the component (10, 100), for centering the functional element, in particular the sensor base element (200) on the component (10, 100),
- after centering the functional element, in particular the sensor base element, the functional element is connected to the component, in particular soldered thereto.

9. Method according to claim 8, **characterized in that** after connecting the functional element, in particular the sensor base element (200) and the component (10, 100), the centering pin (310) is removed from the opening and/or bore.

10. Method according to one of claims 8 to 9, **characterized in that** the component (10, 100) comprises a base plate having at least one coated surface in which the substantially coating-free opening and/or bore is arranged.

## Revendications

1. Procédé pour la fabrication d'une pièce (10, 100) comportant des capteurs, avec au moins une surface dans laquelle est disposée au moins une ouverture et/ou un perçage en grande partie non revêtue, en particulier un trou borgne, comprenant les étapes suivantes :
- la pièce (10, 100) est mise en forme à froid avec au moins une ouverture et/ou perçage présentant un revêtement,
- l'ouverture et/ou perçage est retravaillée pour augmenter son diamètre (A) d'une mesure supplémentaire, de façon à éliminer à peu près complètement le revêtement dans la zone de l'ouverture et/ou perçage, pour donner une ouverture et/ou perçage à peu près sans revêtement, dans lequel le revêtement est appliqué sur la surface de l'ouverture et/ou
perçage et l'ouverture et/ou perçage est agrandie à l'emporte-pièce de la mesure supplémentaire, le revêtement étant alors raclé au niveau de l'ouverture et/ou perçage, et le matériau de la pièce est un métal.

2. Procédé selon la revendication 1, **caractérisé en ce que** le métal est l'un des métaux suivants :
- acier, acier inoxydable, alliages de nickel, Kovar
- métaux non ferreux, en particulier aluminium, laiton, cuivre, alliages non ferreux.

3. Procédé selon la revendication 1 ou 2, **caractérisé en ce que** le diamètre de l'ouverture et/ou perçage est inférieur à 20 mm, en particulier inférieur à 10 mm, et/ou supérieur à 0,2 mm.

4. Procédé selon l'une des revendications 1 à 3, **caractérisé en ce qu'**une ouverture traversante est obtenue à partir de l'ouverture et/ou perçage par découpe à l'emporte-pièce.

5. Procédé selon l'une des revendications 1 à 4, **caractérisé en ce que** la pièce comporte une autre ouverture en face de l'ouverture et/ou perçage, en particulier une zone dégagée (50).

6. Procédé selon l'une des revendications 1 à 5, **caractérisé en ce que** le revêtement (20) comprend un ou plusieurs des matériaux de revêtement suivants, appliqués par voie chimique ou galvanique :
- Au,
- Ag, Pt, Ni, Cu, Sn.

7. Procédé selon l'une des revendications 1 à 6, **caractérisé en ce que** la pièce, de préférence la pièce en forme d'anneau ou de plaque, en particulier la platine de base, présente une épaisseur D, en particulier comprise entre 1 mm et 10 mm, de préférence de 3 mm à 6 mm.

8. Procédé pour assembler un élément fonctionnel, en particulier un élément de base de capteur, qui est disposé par-dessus une ouverture (12) à peu près non revêtue d'une pièce (10, 100), avec la pièce (10, 100) présentant une ouverture et/ou perçage pour obtenir un dispositif, en particulier un capteur de pression, qui comprend l'élément fonctionnel et la pièce, lequel procédé comprend les étapes suivantes :
- fabrication du composant (10, 100) par un procédé selon l'une des revendications 1 à 7,
- une goupille de centrage (310) étant introduite dans le trou borgne si l'ouverture et/ou perçage est un trou borgne ou, si l'ouverture et/ou perçage est une ouverture traversante découpée à l'emporte-pièce, la goupille de centrage (310) étant introduite dans ou à travers une ouverture traversante (12) de la pièce (10, 100) pour centrer l'élément fonctionnel, en particulier l'élément de base du capteur (200) sur la pièce (10, 100)
- l'élément fonctionnel étant assemblé avec la pièce, en particulier par soudage, après le centrage de l'élément fonctionnel, en particulier de l'élément de base de capteur.

9. Procédé selon la revendication 8, **caractérisé en ce qu'**après l'assemblage de l'élément fonctionnel, en particulier de l'élément de base de capteur (200), et de la pièce (10, 100), la goupille de centrage (310) est retirée de l'ouverture et/ou perçage.

10. Procédé selon l'une des revendications 8 à 9, **caractérisé en ce que** la pièce (10, 100) présente une plaque de base avec au moins une surface revêtue, dans laquelle l'ouverture et/ou perçage à peu près non revêtue est disposée.
